# EUROPEAN PATENT APPLICATION

(11) **EP 2 179 971 A1**
(43) Date of publication of application: **28.04.2010**
(21) Application number: 08740607.0
(22) Date of filing: 11.04.2008
(51) Int. Cl.: C02F 1/46, B01D 61/46

(54) **APPARATUS FOR PRODUCING ELECTROLYZED WATER, METHOD FOR PRODUCING ELECTROLYZED WATER, AND ELECTROLYZED WATER**

(30) Priority: 13.04.2007 JP 2007105751; 13.06.2007 JP 2007156920; 03.07.2007 JP 2007175680; 31.07.2007 JP 2007200159; 31.08.2007 JP 2007227213; 31.12.2007 JP 2007341587
(71) Applicant: Arai, Yusho, Fuchu-shi Tokyo 183-0021 (JP)
(72) Inventor: Arai, Yusho, Fuchu-shi Tokyo 183-0021 (JP)
(74) Representative: Forstmeyer, Dietmar
(86) International application number: PCT/JP2008/057550
(87) International publication number: WO 2008/130016

(57) **Abstract**

Disclosed is an electrolyzed water manufacturing method and electrolyzed water manufacturing device capable of producing efficiently weakly acidic through weakly alkaline electrolyzed water, and capable of producing said electrolyzed water on a large scale. The electrolyzed water manufacturing device 10 comprises: an anode chamber 20 that is provided with an anode electrode 22; a cathode chamber 30 that is provided with a cathode electrode 32; a middle chamber 40 for containing an aqueous electrolytic solution, disposed between the anode chamber 20 and the cathode chamber 30; an anion exchange membrane 24 for partitioning between the anode chamber 20 and the middle chamber 40; and a cation exchange membrane 34 for partitioning between the cathode chamber 30 and the middle chamber 40. The anode chamber 20 and the cathode chamber 30 are connected by a connecting hole 52 provided in a partitioning wall 50.

## Description

### FIELD OF THE INVENTION

The present invention relates to an electrolyzed water manufacturing device having a middle chamber for containing an aqueous electrolytic solution, to an electrolyzed water manufacturing method that uses the electrolyzed water manufacturing device, and to electrolyzed water obtained using the electrolyzed water manufacturing method.

### PRIOR ART

As a typical electrolyzed water producing device there is the producing device of a type with one tank or of a type with two tanks (chambers). For example, an aqueous electrolytic solution, such as a saline solution, and an anode plate and a cathode plate are provided, and an electrolyzed water that contains sodium chloride is produced through an electrolysis process wherein an electric current is caused to flow through the anode plate and the cathode plate. Note that not only is toxic trihalomethane produced in this electrolysis process, but the sodium chloride remains as-is.

Additionally, structure disclosed in Japanese Unexamined Patent Application Publication 2005-329375, for example, is known as a two tank (chamber) producing device. This two chamber producing device forms two electrolysis chambers that face each other, divided by an ion-permeable membrane in the center portion of a single tank, wherein source water supplying means and electrolyzed water extracting means are provided in each of the electrolysis chambers, wherein an electrode for use as an anode and an aqueous chloride solution (saline solution) providing means are provided in one electrolysis method and an electrode for a cathode is provided in the other electrolysis chamber. Through the electrolysis process wherein specific voltages are applied to each of the electrodes, acidic electrolyzed water that includes chlorine gas and sodium chloride is obtained in the electrolysis method on the anode side, and hydrogen gas and alkaline electrolyzed water is obtained in the electrolysis chamber on the cathode side.

The three-tank electrolysis device disclosed in, for example, Japanese Unexamined Patent Application Publication 2000-246249 (Reference Two) is known as a device for producing electrolyzed water that does not include sodium chloride. This electrolysis device of the three-tank method has a structure provided with an ion exchange membrane on both sides of a middle chamber, with an anode chamber and a cathode chamber on both sides thereof, with electrode plates interposed therebetween. A highly concentrated aqueous electrolytic solution, for example, a 10% aqueous potassium chloride or sodium chloride solution, is filled into the middle chamber. With streams of tap water, for example, in the anode chamber and the cathode chamber, passing through an electrolysis process with a current between the electrodes produces an electrolyzed water that does not contain sodium chloride, that is, an acidic electrolyzed water with a pH between about 2.0 and 3.0 in the anode chamber. On the other hand, an alkaline electrolyzed water with a pH between about 10.0 and 12.0 is produced in the cathode chamber.
Patent Reference 1: Japanese Unexamined Patent Application Publication 2005-329375
Patent Reference 2: Japanese Unexamined Patent Application Publication 2000-246249

### DISCLOSURE OF THE INVENTION

### PROBLEM SOLVED BY THE PRESENT INVENTION

However, in producing the electrolyzed water disclosed in Reference 1, saline solution is supplied to one of the chambers (the anode side) when performing the electrolysis in order to increase the efficiency of the electrolysis. The acidic electrolyzed water that is produced in the electrolysis chamber on the anode side contains not just hypochlorous acid, but a sodium chloride component as well, and thus there will be the occurrence of gasification of chlorine gas, and the like, due to shifts in equilibrium. As a result, it is difficult to maintain the antimicrobial strength required in the acidic electrolyzed water over an extended period of time due to the gasification that occurs to the hypochlorous acid over a short period of time, and thus there is a problem in that there is a limitation to the application thereof.

Furthermore, in the electrolyzed water producing method disclosed in Reference 2, a three-tank method is used for the electrolysis chambers, where an aqueous electrolytic solution, such as saline solution, is stored in the electrolytic chamber in the middle, and tap water or water filtered through a water filter, is contained in the anode and cathode electrolysis chambers on both sides, and is electrolyzed. In the electrolysis process wherein the aqueous electrolytic solution is stored in the middle electrolysis chamber, there is the benefit of being able to produce efficiently, with a low voltage, low current, and a short time, acidic electrolyzed water and alkaline electrolyzed water that do not include sodium chloride. However, because all three of the electrolysis chambers function in a batch-wise process, not only does this approach not work well with mass production, but also there is no concept whatsoever of producing electrolyzed water that contains hypochlorous acid that is adjusted so as to be weakly acidic, neutral, or weakly alkaline through mixing or blending the acidic electrolyzed water and the alkaline electrolyzed water.

Note that while acidic or alkaline electrolyzed water is being produced through the electrolysis methods that use either the two-chamber or the three-chamber electrolysis tanks as set forth in the prior art, it is difficult to cause the effective chlorine concentration of the electrolyzed water that is produced to be within a specific range, and difficult to adjust the pH value between being weakly acidic and weakly alkaline. Furthermore, in the method of electrolysis using the two-chamber or the three-chamber electrolysis tanks, there is essentially no manufacturing of sodium hypochlorite.

The object of the present invention is to provide an electrolyzed water manufacturing device, an electrolyzed water manufacturing method, and electrolyzed water wherein it is possible to produce efficiently electrolyzed water that is weakly acidic through weakly alkaline.

### MEANS FOR SOLVING THE PROBLEM

### 1. ELECTROLYZED WATER MANUFACTURING DEVICE

The electrolyzed water manufacturing device according to the present invention comprises:
and anode chamber provided with an anode electrode;
a cathode chamber provided with a cathode electrode;
a middle chamber for containing an aqueous electrolytic solution, provided between the anode chamber and the cathode chamber;
a first partitioning membrane made from a cation exchange membrane, for partitioning between the anode chamber and the middle chamber; and
a second partitioning membrane, made from an anion exchange membrane, for partitioning between the cathode chamber and the middle chamber; wherein
the anode chamber and the cathode chamber are connected; and
water can be moved in both directions between the anode chamber and the cathode chamber.

The present inventors noticed that, in manufacturing electrolyzed water, that mixing the acidic water produced in the anode chamber into the cathode chamber keeps scaling from adhering to the cathode in the cathode chamber. Consequently, the present invention enables continuous operation over an extended period of time because it is possible to eliminate or reduce the frequency of the process for cleaning the scaling because scaling does not adhere to the cathode in the cathode chamber due to the connection between the anode chamber and the cathode chamber.

In the present invention, the anode chamber and the cathode chamber are partitioned by a partitioning wall, where a connecting hole for connecting between the anode chamber and the cathode chamber can be provided in the partitioning wall. This makes it possible to achieve a compact electrolyzed water manufacturing device because there is no need to form a separate connecting passage.

In the present invention, a delivery ratio adjusting valve for determining the delivery ratio between the amount of water that flows in the anode chamber and the amount of water that flows in the cathode chamber may be provided. The delivery ratio adjusting valve makes it possible to adjust the ratio of the flows in the anode chamber and the cathode chamber, facilitating the adjustment of the pH.

The present invention may include a first expulsion valve for adjusting the expulsion flow rate with which the fluid is expelled from the anode chamber, and a second expulsion valve for adjusting the expulsion flow rate with which the fluid is expelled from the cathode chamber. This makes it possible to adjust the amount of the acidic water that is produced in the anode tank that mixes into the cathode tank by adjusting the degrees of opening of the first expulsion valve and the second expulsion valve.

The present invention may include a first fluid supplying opening for supplying fluid to the anode chamber, a second fluid supplying opening for supplying fluid to the cathode chamber, a first expelling opening for expelling fluid from the anode chamber, and a second expelling opening for expelling fluid from the cathode chamber, where the first supplying opening may be provided at the upper portion of the anode chamber, the second supplying opening may be provided at the upper portion of the cathode chamber, the first expelling opening may be provided at the lower portion of the anode chamber, and the second expelling opening may be provided at the lower portion of the cathode chamber.

This makes it possible for the fluid that is introduced into the anode chamber to flow from the top to the bottom, increasing the time of contact between the gas produced in the anode chamber and the fluid that has been introduced, making it possible to produce the gas-liquid reaction reliably.

In the present invention, the anode chamber may be such that the height of the anode chamber be greater than the width of the anode chamber in the direction that is perpendicular to the anode. The ratio of the height of the anode chamber to the width of the anode chamber (height/width) may be, for example, greater than 1.5, and preferably between 1.5 and 5.0. The greater the height of the anode chamber, the further it is possible to extend the time of the gas-liquid reaction in the fluid that is introduced into the anode chamber, because the gas that is produced within the anode chamber travels upward.

In the present invention, the aqueous electrolytic solution contains chloride ions, where the electrolyzed water manufacturing device is particularly useful in manufacturing electrolyzed water that includes hypochlorous acid.

In the present invention, the anion exchange membrane may be provided with pores through which the aqueous electrolytic solution may pass. As a result, the positive ions in the aqueous electrolytic solution can also move through the pores in the cation exchange membrane. In particular, this is useful in producing a mixed water of a hypochlorous acid and sodium hypochlorite.

In the present invention, the diameters of the pores may be between 30 and 80 µm.

The cathode may be covered with a sheet member that is permeable to water. Covering the cathode with a sheet member that is permeable to water causes the electrolyzed water to be held in proximity to the cathode. This increases the amount of charge relative to the water that is held in the vicinity of the cathode 32. [TRANSLATORS NOTE -- RECOMMEND THAT THE "32" BE ELIMINATED HERE, IF THIS TRANSLATION IS FOR FILING.] The increase in the amount of charge relative to the water further decreases the amount of scaling based on the anions.

In the present invention, a connecting passage may be provided connecting between the anode chamber and the cathode chamber. The connecting passage has the benefit of making it easy to understand the amount of water that moves back and forth between the anode chamber and the cathode chamber. The connecting passage may be provided an adjustable valve. The adjustable valve can be used to adjust the amount of water that moves back and forth between the anode chamber and the cathode chamber. Note that the adjustable valve is a concept that includes a simple open/shut valve.

The present invention may be provided with a first gas removing opening for removing gas that is produced in the anode chamber. This makes it possible to exhaust the gas that is produced in the anode chamber, making it possible to prevent the destabilization of the flow rate due to the gas.

The present invention may be provided with a first gas removing opening for removing gas that is produced in the cathode chamber. This makes it possible to exhaust the gas that is produced in the anode chamber, making it possible to prevent the destabilization of the flow rate due to the gas.

In the present invention, an electrode may be provided with a punched hole, where prong electrode portions may be provided extending from an edge of the punched hole. This enables the efficiency of the electrolysis to be increased, without a reduction in the surface area of the electrode, even with an electrode that has a punched hole. The prong electrode portion may be formed by causing the punched out portion of the punched part to remain. This enables the easy fabrication of an electrode having a punched hole and a prong electrode portion.

The present invention may be provided with an open/shut valve for determining whether or not water will be supplied to the anode chamber. In a normal electrolysis device, electrolysis is not possible unless water is supplied to both the anode chamber and the cathode chamber. However, because in the present invention, the anode chamber and the cathode chamber are connected, electrolysis is possible using a method that is not possible in an ordinary electrolysis device, through supplying water to the anode chamber through the cathode chamber. For example, an electrolyzed water having strong acidity can be produced when the open/shut valve is closed and the electrolyzed water is expelled from only the anode chamber side.

The present invention may be provided with an open/shut valve for determining whether or not water will be supplied to the cathode chamber. In a normal electrolysis device, electrolysis is not possible unless water is supplied to both the anode chamber and the cathode chamber. However, because in the present invention, the anode chamber and the cathode chamber are connected, electrolysis is possible using a method that is not possible in an ordinary electrolysis device, through supplying water to the cathode chamber through the anode chamber. For example, an electrolyzed water having strong alkalinity can be produced when the open/shut valve is closed and the electrolyzed water is expelled from only the cathode chamber side.

In the present invention:
a plurality of anode chambers may be provided;
a plurality of cathode chambers may be provided;
electrolyzed water expelled from each of the anode chambers may be exhausted from a common exhaust opening; and
electrolyzed water expelled from each of the anode chambers may be exhausted from a common exhaust opening.

The present invention enables parallel processing of the electrolysis of water through connecting the plurality of anode chambers in parallel and connecting the plurality of cathode chambers in parallel, facilitating the production of large volumes of electrolyzed water.

The present invention may include a first connecting hole provided on the side wherein the source water is supplied and a second connecting hole provided on the side wherein the electrolyzed water is expelled, where the first connecting hole may be smaller than the second connecting hole.

This makes it possible to suppress secondary electrolysis in the cathode chamber due to the movement, through the connecting hole on the side wherein there is primarily expulsion, even when the substance that is produced in electrolysis (for example, hypochlorous acid) moves to the cathode.

In the present invention, the middle chamber may be separated into a plurality of compartments in the direction extending from the anode to the cathode, where a supplying portion for an electrolyte or an aqueous electrolytic solution may be provided in each of the plurality of compartments. This enables the production of large volumes of electrolyzed water, as described below in the Effects of Operation Section of the Forms of Embodiment.

In the present invention, an aqueous electrolytic solution exhausting portion may be provided in each of the plurality of compartments in the middle chamber of the electrolyzed water manufacturing device. This enables the suppression of the breakdown, through further electrolysis on the expulsion opening side, of the electrolyzed water that has been produced.

In the present invention, each of the plurality of compartments in the middle chamber may be connected to the compartments adjacent thereto.

In the present invention, the plurality of compartments in the middle chamber may be partitioned by respective dividing portions. The water that is electrolyzed is retained by partitioning by the dividing portions, enabling the achievement of more efficient electrolysis.

In the present invention:
the middle chamber may be provided with a supplying portion for an electrolyte or an aqueous electrolytic solution, and with an exhaust portion for the aqueous electrolytic solution; and
a secondary supplying portion for supplying an electrolyte and/or an aqueous electrolytic solution may be provided between the supplying portion for the aqueous electrolytic solution and the exhaust portion for the aqueous electrolytic solution.

This enables the production of a large volume of the electrolyzed water, as described below in the Effects of Operation Section of the Forms of Embodiment.

### 2. ELECTROLYZED WATER MANUFACTURING METHOD

The electrolyzed water manufacturing method according to the present invention is a method for manufacturing electrolyzed water using the electrolyzed water manufacturing device according to the present invention, including a process for electrolysis while mixing the water that is produced in the anode chamber with the water that is produced in the cathode chamber.

### 3. ELECTROLYZED WATER

The electrolyzed water according to the present invention is that which is obtained through the electrolyzed water manufacturing method according to the present invention.

### BRIEF DESCRIPTION OF THE DRAWINGS

FIG. 1 is a diagram illustrating schematically an electrolyzed water manufacturing device.
FIG. 2 is a diagram for explaining the connecting holes.

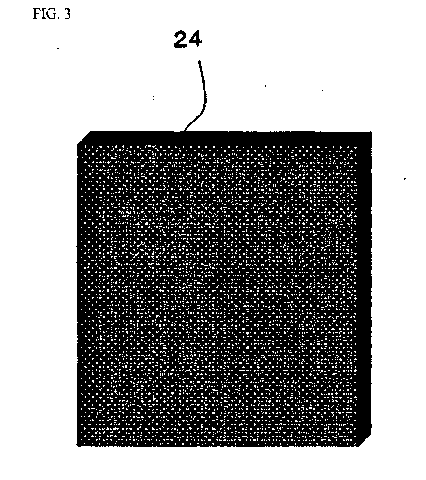

FIG. 3 illustrates schematically a cation exchange membrane according to a first modified example.

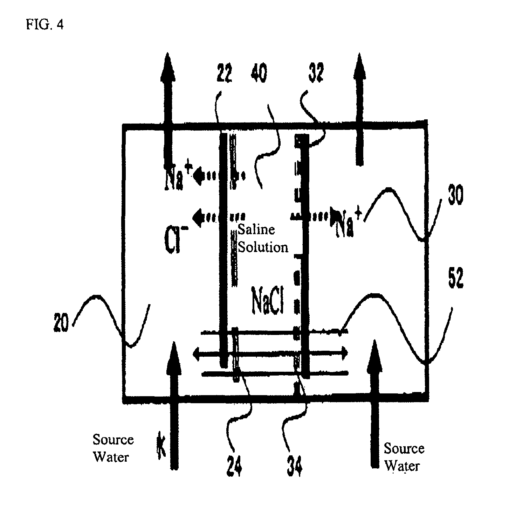

FIG. 4 is an explanatory diagram illustrating the principle relating to the first modified example.
FIG. 5 is a diagram illustrating schematically an electrolyzed water manufacturing device according to a second modified example.
FIG. 6 is a diagram illustrating schematically a side view of a cathode and a sheet member according to the second modified example.
FIG. 7 is a diagram illustrating schematically the surface of the cathode and the sheet member according to the second modified example.
FIG. 8 illustrates schematically the surface of the sheet member according to the second modified example.
FIG. 9 is a diagram illustrating schematically the surface of the cathode according to the second modified example.
FIG. 10 is an explanatory diagram for explaining the effects of operation of the electrolysis device according to the second modified example.
FIG. 11 is a diagram illustrating schematically an electrolysis device according to a third modified example.
FIG. 12 is a diagram illustrating schematically an electrolysis device according to a fourth modified example.
FIG. 13 is a diagram illustrating schematically an electrode according to a fifth modified example.
FIG. 14 is a diagram illustrating schematically an electrolysis device according to a sixth modified example.
FIG. 15 is a diagram illustrating schematically an electrolysis device according to a seventh modified example.
FIG. 16 is a diagram illustrating schematically an electrolysis device according to an eighth modified example.
FIG. 17 is a diagram illustrating schematically an electrolysis device according to a ninth modified example.
FIG. 18 is a diagram illustrating schematically the electrolysis device according to the ninth modified example.
FIG. 19 is a diagram illustrating schematically the electrolysis device according to the ninth modified example.

### EXPLANATION OF CODES

10: Electrolysis Device
20: Anode Chamber
22: Anode
22a: Prong Electrode Portion
22b: Punched Hole
24: First Partitioning Membrane
26: First Water Supplying Opening
28a: First Expelling Opening
28b: First Expulsion Valve
28c: First Gas Removing Opening
30: Cathode Chamber
32: Cathode
32a: Prong Electrode Portion
32b: Punched Hole
34: Second Partitioning Membrane
36: Second Water Supplying Opening
38a: Second Expelling Opening
38b: Second Expulsion Valve
38c: Second Gas Removing Opening
40: Middle Chamber
50: Partitioning Wall
52: Connecting Hole
54: Connecting Passage
56: Adjustable Valve
58a: First Open/Shut Valve
58b: Second Open/Shut Valves
60: Delivery Ratio Adjusting Valve
70: DC Power Supply
80: Aqueous Electrolytic Solution Supply Source
90: Sheet Member

### MOST PREFERRED FORM FOR CARRYING OUT THE INVENTION

A preferred form of embodiment according to the present invention will be explained below in reference to the figures.

### 1. ELECTROLYZED WATER MANUFACTURING DEVICE

In the present form of embodiment, an example of application of the electrolyzed water manufacturing device according to the present invention will be illustrated for the case of manufacturing hypochlorous acid acidic water.

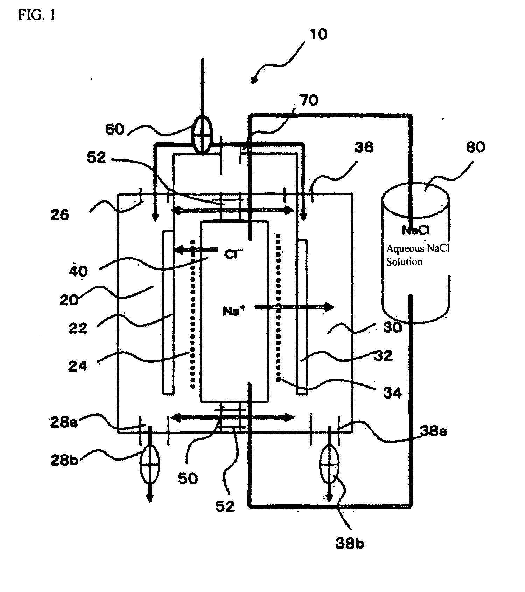

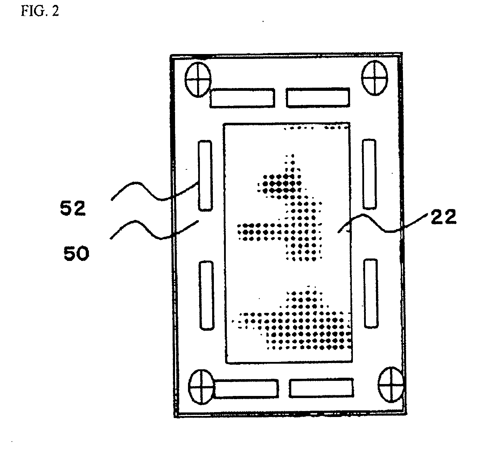

FIG. 1 illustrates schematically an electrolyzed water manufacturing device (hereinafter termed a "electrolysis device"). FIG. 2 is a diagram illustrating the anode chamber, the cathode chamber, the partitioning wall, and the electrodes.

The electrolysis device 10 includes an anode chamber 20, a cathode chamber 30, and a middle chamber 40. The middle chamber 40 is provided between the anode chamber 20 and the cathode chamber 30. Connecting holes 52 are provided in the partitioning wall 50 that partitions the anode chamber 20 and the cathode chamber 30. The connecting holes 52 are provided around the middle chamber 40. The connecting holes 52 form a structure wherein the water can move back and forth between the anode chamber 20 and the cathode chamber 30.

An aqueous electrolytic solution is filled into the middle chamber 40. The aqueous electrolytic solution that is supplied to the middle chamber 40 supplies anions (for example, sodium ions) to the cathode chamber 30 and supplied cations (for example, chloride ions) to the anode chamber 20. The aqueous solution that passes through the middle chamber 40 may be returned to the aqueous electrolytic solution supplying source 80 to reuse and cycle the aqueous electrolytic solution, or an electrolyte may be added to the middle chamber 40 in the amount that is consumed. The aqueous electrolytic solution may be, for example, an aqueous chloride salt solution (an aqueous Sodium chloride solution or an aqueous potassium chloride solution). The concentration of the aqueous electrolytic solution may be, for example, the saturation concentration for the electrolyte.

The middle chamber 40 and the anode chamber 20 may be partitioned by a first partitioning membrane 24 made from a cation exchange membrane. The first partitioning membrane 24 being made from a cation exchange membrane causes only the cations to pass selectively through the first partitioning membrane 24, without the anions in the middle chamber 40 passing through the first partitioning membrane 24. The cation exchange membrane applied to the first partitioning membrane 24 may use a known technology.

The middle chamber 40 and the cathode chamber 30 may be partitioned by a second partitioning membrane 34 made from an anion exchange membrane. The second partitioning membrane 34 being made from an anion exchange membrane causes only the anions to pass selectively through the second partitioning membrane 34, without the cations in the middle chamber 40 passing through the second partitioning membrane 34. The anion exchange membrane applied to the second partitioning membrane 34 may use a known technology.

A partitioning membrane fastening frame (not shown) may be provided between the first partitioning membrane 24 and the second partitioning membrane 34.

The cathode 32 is connected to the negative side of a DC power supply 70, and the anode 22 is connected to the positive side of the DC power supply 70. The DC power supply 70 is structured so that the voltage or current thereof can be set at will. In the power supply 70, the voltage, for example, may be set at will in a range between 5 V and 20 V, and when it comes to the current as well, one may cite an example wherein the current may be set to an appropriate selection in the range of 3 to 26 A. The anode 22 and cathode 32 may be made from mesh-shaped electrodes or, for example, electrodes that have undergone punching processes at about 1.5 mm. Note that the electrodes that have been processed through punching may be formed so that the surface area removed by punching can be about 50%, for example, of the surface area used as the electrode. The material for the electrodes may use well-known materials.

The sizes of the anode 22 and the cathode 32 may be asymmetrical. That is, the sizes of the surface areas of the electrodes may be different. This makes it possible to change the amount of electrolysis at the anode 22 and the amount of electrolysis at the cathode 32. Furthermore, having the electrode surface area of the anode electrode be different from the electrode surface area of the cathode electrode makes it possible to adjust as appropriate the acidity of the mixed electrolyzed water. That is, having the electrode surface area of the anode electrode 22 be larger than the electrode surface area of the cathode electrode 32 causes the amount of acidic electrolyzed water produced to be greater than the amount of alkaline electrolyzed water produced, making it possible to increase the acidity. On the other hand, having the electrode surface area of the cathode electrode 32 be larger than the electrode surface area of the anode electrode 22 causes the amount of alkaline electrolyzed water produced to be greater than the amount of acidic electrolyzed water produced, making it possible to increase the proportion of alkalinity.

The electrolysis device 10 is provided with a first water supplying opening 26 for supplying water to the anode chamber 20 and a second water supplying opening 36 for supplying water to the cathode chamber 30. A flow path that is connected to the first water supplying opening 26 and the second water supplying opening 36 is structured from a single flow path that branches. A delivery ratio adjusting valve 60 for adjusting the amounts of water delivered to the anode chamber 20 and the cathode chamber 30 is provided at the point wherein this flow path branches. The delivery ratio adjusting valve 60 may be given a supply volume adjusting function for adjusting the amount of water that is supplied to the electrolysis device 10.

Additionally, the electrolysis device 10 is provided with a first expelling opening 28a for expelling fluid from the anode chamber 20 and a second expelling opening 38a for expelling fluid from the cathode chamber 30. Moreover, the electrolysis device 10 has a first expulsion valve 28b for adjusting the amount of fluid expelled from the first expelling opening 28a and a second expulsion valve 28b for adjusting the amount of fluid expelled from the second expelling opening 28a.

The first expelling opening 28a may be provided at a lower portion of the anode chamber 20, and the first water supplying opening 26 may be provided at an upper portion of the anode chamber 20. Doing so enables the water that is supplied from the first water supplying opening 26 to flow from the top towards the bottom. Consequently, the bubbles formed from the gas that is produced at the anode 22 (chlorine, in the case wherein the aqueous electrolytic solution is sodium chloride or potassium chloride) will be pushed down by the water, making it more difficult for the bubbles to move upward, extending, to some degree, the time of the gas-liquid contact between the gas (the chlorine) and the water, causing the reaction into hypochlorous acid to be more certain.

The anode chamber 20 may be vertically long. Specifically, the height of the anode chamber 20 may be greater than the width of the anode chamber 20 in the direction that is perpendicular to the anode 22. The ratio (height/width) of the height of the anode chamber relative to the width of the anode chamber may be, for example, greater than 1.5, or preferably, between 1.5 and 5.0. Having this type of vertical length enables the time of contact between the gas that is produced in the anode chamber 20 (the chlorine gas) and the water to be longer, making the reaction between the chlorine and the water more certain. The same is true for the anode 30 as well.

### 2. OPERATION

The operation of the electrolysis device will be explained next.

First the delivery ratio adjusting valve 60 is adjusted and water is provided to the anode chamber 20 and the cathode chamber 30. The amount of flow of the water is, for example, between 0.5 and 1.5 1/m.

Along with supplying the water, a voltage is applied between the anode 22 and the cathode 32 to perform electrical breakdown (electrolysis). For example, during the electrolysis the voltage may be between 5 V and 10 V and the current may be between 3 and 10 A. In particular, having 1500 C, or preferably 2000 C per liter of the aqueous solution applied to the cathode chamber 30 reduces scaling. When the voltage is applied between the anode 22 and the cathode 32, the anions in the middle chamber 40 (for example, sodium ions in the case of the electrolyte being sodium chloride) move to the cathode chamber 30 through the second partitioning membrane 34, and the cations in the middle chamber 40 (chloride ions in the case of the electrolyte being sodium chloride) move to the anode chamber 20 through the first partitioning membrane 24.

In the anode chamber 20, the chloride ions undergo the following reaction at the anode 22, producing chlorine:

2Cl⁻ → Cl₂ + 2e⁻

The chlorine then reacts with water to produce hypochlorous acid.

Cl₂+ H₂O → HClO + HCl

On the other hand, in the cathode chamber 30, the following reaction takes place at the cathode:

H₂O + e⁻ → 1/2 H₂ + OH⁻

During this electrolysis, the acidic electrolyzed water that is produced in the anode chamber 20 moves into the cathode chamber 30 through the connecting holes 52 provided in the partitioning wall 50 that separates the anode chamber 20 and the cathode chamber 30, and the alkaline electrolyzed water that is produced in the anode chamber 30 moves to the anode chamber 20 as well. This causes the acidic water produced in the anode chamber 20 to mix with the alkaline electrolyzed water produced in the cathode chamber 30. Moreover, the acidic water that is produced in the anode chamber 20 moving into the cathode chamber 30 can prevent the adhesion of the scaling that is produced at the cathode 32.

During the electrolysis, the first expulsion valve 28b and the second expulsion valve 38b are adjusted to control the amounts of electrolyzed water expelled from the anode chamber 20 and the cathode chamber 30.

Mixing the electrolyzed water that is expelled from the first expelling opening 28a and the electrolyzed water that is expelled from the second expelling opening 38a produces the weakly alkaline, neutral, or weakly acidic hypochlorous acid as set forth in the present form of embodiment.

Note that either the first expulsion valve 28b or the second expulsion valve 38b may be closed completely so as to cause expulsion from only the first expelling opening 28a or the second expelling opening 28b 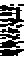 . In this case, the mixed water is produced internally within the either the anode chamber 20 or the cathode chamber 30.

### 3. EFFECTS OF OPERATION

The present form of embodiment can claim the following effects of operation.

(1) Typically the anions supplied from the middle chamber 40 adhere to the cathode 32 in the cathode chamber 20, causing scaling. However, the present inventors have discovered that the adherence of scaling to the cathode 32 is prevented through the introduction and mixing of the acidic water produced in the anode chamber 20 into the cathode chamber 30, given the electrolysis device 10 as set forth in the present example of embodiment. Because, in this way, scaling does not adhere to the cathode 32, it is possible to eliminate or reduce the process for removing the scaling that adheres to the cathode 32 (reverse rinsing), enabling continuous operation.

Additionally, opening only the second expulsion valve 38b to expel the electrolyzed water from only the second expelling opening 38a of the cathode chamber 30 enables the acidic water produced in the anode chamber 20 to flow into the anode chamber 30 side to produce alkaline electrolyzed water that contains a high concentration of hypochlorous acid, further preventing scaling on the cathode 32.

(2) Conventionally there has been no conception of mixing the electrolyzed water produced in the anode chamber 20 with the electrolyzed water produced in the cathode chamber 30. However, the present inventors discovered that the electrolyzed water produced in the anode chamber 20 and the electrolyzed water produced in the cathode chamber 30 can be mixed to cause the mixed water to exhibit weak alkalinity, neutrality, or weak acidity. Furthermore, while conventionally the electrolyzed water from only one side has been used and the electrolyzed water from the other side has been discarded, mixing these electrolyzed waters makes it possible to use the electrolyzed water from both sides, enabling the electrolyzed water to be used effectively.

(3) The delivery ratio adjusting valve 60 can be adjusted to adjust the electric current that flows into the water per unit water flow that flows to the cathode 32. That is, if the electric current is kept constant, reducing the amount of water flow increases the electric current that flows to the water per unit water flow. The greater the electric current per unit water flow that flows to the cathode 32, the less likely the adherence of scaling on the cathode 32. Consequently, the amount of water supplied to the cathode chamber 30 can be reduced in order to reduce with more certainty the scaling that adheres to the cathode 32.

(3) The provision of the first and second water supplying openings 26 and 36 at the upper portions of the anode chamber 20 and the cathode chamber 30, and the provision of the first and second expelling openings 28a and 28b at the lower portions of the anode chamber 20 and the cathode chamber 30, to cause the water to flow from the top to the bottom, makes it more difficult for the chlorine that is produced at the anode 22 to move upwards, making it possible to extend the time over which there is contact between the chlorine and the water. This makes it possible to achieve with more certainty the reaction into hypochlorous acid.

(4) Normally one may think that when the flow distributed to the anode chamber 20 side is small, then when the electrolyzed water produced in the anode chamber 20 is mixed with the electrolyzed water that is produced in the cathode chamber 30, then there will be a great reduction in the concentration of the hypochlorous acid. However, the inventors discovered that the electrolyzed water obtained from the present form of embodiment does not have a large decrease in the concentration of the hypochlorous acid (the effective chlorine concentration). Consequently, there is no drop in the antimicrobial power in the present form of embodiment, because the electrolyzed water that is obtained contains a high concentration of the hypochlorous acid.

Note that while it is generally known that hypochlorous acid is included in the acidic electrolyzed water that is produced on the cathode side, when attempts are made to manufacture hypochlorous acid water adjusted so that the pH value is slightly acidic, neutral, or slightly alkaline, either the pH value would be adjusted by adding a salt to sodium hypochlorite (soda) manufactured industrially or one would manufacture through an appropriate mixture of an alkaline electrolyzed water with an acidic electrolyzed water that includes sodium chloride, produced through the method in Reference 1; however, in both cases the pH value alone would be adjusted, without any substantial change in the effective chlorine concentration.

(5) In the present form of embodiment, the magnitude relationships between the amount of water supplied to the anode chamber 20 and the amount of water supplied to the cathode chamber 30, and the magnitude relationships between the amounts of opening/closing (the amounts of constriction) of the first expulsion valve 28b and the second expulsion valve 38b can be combined to enable adjustment to a variety of pH values in the range of weak acidity to weak alkalinity, as illustrated in Table 1. 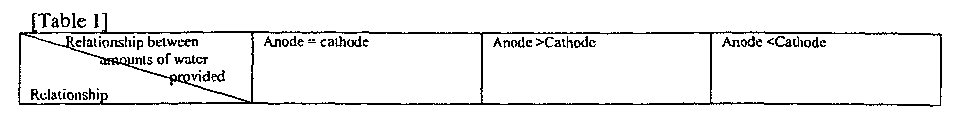 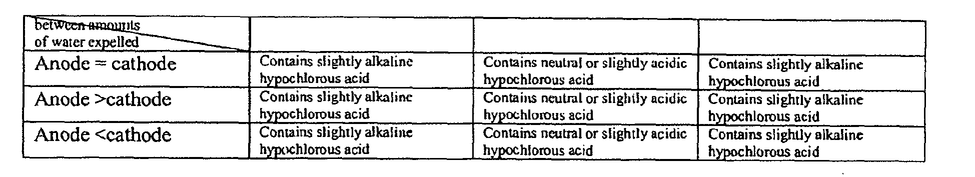 Note that by opening the first expulsion valve 28b to the same degree as the second expulsion valve 38b it is possible to reduce the mixing ratio of the electrolyzed water produced in the anode chamber 20 and the electrolyzed water produced in the cathode chamber 30, and thus this mixing ratio can be adjusted, in particular, by the first and second expulsion valves 28b and 38b.

(6) While conventionally when one was used, the other would be discarded, in the present manufacturing method it is possible to not waste valuable water resources.

(7) In the conventional three-chamber electrolysis device it was not possible to produce sodium hypochlorite. That is, because the sodium ions would not move to the anode chamber, and the hypochlorite acid would not move to the anode chamber, there would be no reaction between the sodium ions and the hypochlorous acid, and thus there was no production of sodium hypochlorite. However, given the present invention there is the connecting hole 42, and thus the hypochlorous acid and the sodium ions react, thus causing the production of sodium hypochlorite, making it possible to produce a mixed water of sodium hypochlorite and hypochlorous acid. Doing so makes it possible to achieve a mixed electrolyzed water having a cleaning effect and an antimicrobial effect. Note that the sodium hypochlorite was recognized as a food additive by the Ministry of Health, Labor, and Welfare at the time of the present application.

As a comparative example, one may consider the production of the sodium hypochlorite using the two-chamber electrolysis device. A two-chamber electrolysis device is a device wherein an anode chamber and a cathode chamber are separated by a partitioning membrane, and electrolysis is performed after dissolving an electrolyte such as sodium chloride in water. When producing sodium hypochlorite using the two-chamber electrolysis device, sodium chloride is dissolved in water, and thus there is the limitation that the concentration of sodium chloride is high.

Additionally, while one may consider a method of producing sodium hypochlorite through reacting chloride ions in an alkaline environment, in such a case there will be a problem in that trihalomethane will be produced. However, in the present example of embodiment, the hypochlorous acid is produced in the acidic anode chamber, and the hypochlorous acid is produced through reacting that hypochlorous acid with sodium ions, and thus no trihalomethane is produced.

(8) There is compliance with wastewater standards, without having to treat the wastewater, through the production of electrolyzed water that is nearly neutral, and thus there is benefit of not placing a burden on the environment, such as environmental pollution.

(9) The electrolytic hypochlorous acid has the benefit of being neutralized easily through contact with an organic substance.

(10) When electrolysis has been performed in a state wherein the anode chamber and the cathode chamber are not connected, then the electrolyzed water that is expelled from the cathode chamber includes precipitates (calcium carbonate). However, the present inventors have discovered that no precipitate is produced through electrolysis in a state wherein the anode chamber 20 and the cathode chamber 30 are connected; this is because the electrolyzed water expelled from the cathode chamber 30 includes also the electrolyzed water that has entered into the cathode chamber 30 from the anode chamber 20. This has, for example, the following effects.

One may consider a case wherein the electrolyzed water expelled from the cathode chamber is stored in a tank to be used when needed. In such a case, if the electrolyzed water were to contain precipitates, that the precipitates would adhere to the inside wall of the tank, requiring frequent cleaning. Furthermore, the precipitates would accumulate in the water intake opening, preventing the water flow, which may cause malfunctions. However, with electrolyzed water that does not contain precipitates, the precipitates will not adhere to the inside walls of the tank, making it possible to reduce the frequency of cleaning, and reliability of flow can be maintained because no precipitates will accumulate within the water intake opening.

### 4. MODIFIED EXAMPLES

### (1) FIRST MODIFIED EXAMPLE

Pores may be provided in the first partitioning membrane 24 that is made out of a cation exchange membrane. The diameters of the pores may be, for example, between 30 and 80 µm. In this case, the first partitioning membrane 24 may be structured from a non-woven fabric.

Doing so facilitates the movement of the sodium ions, and the like, in the aqueous electrolytic solution moving into the anode chamber 20, making it easier to produce a mixed water of sodium hypochlorite and hypochlorous acid.

### (2) SECOND MODIFIED EXAMPLE

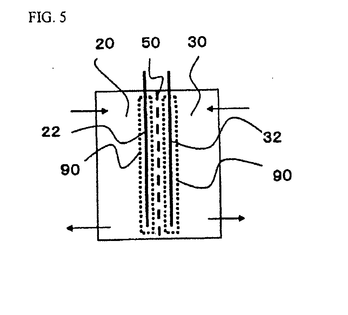

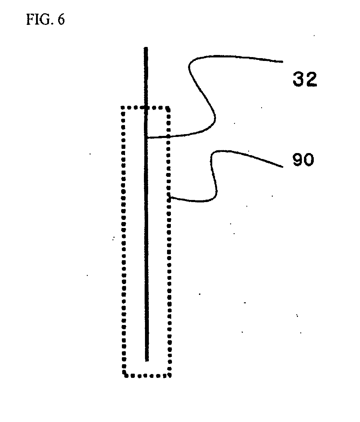

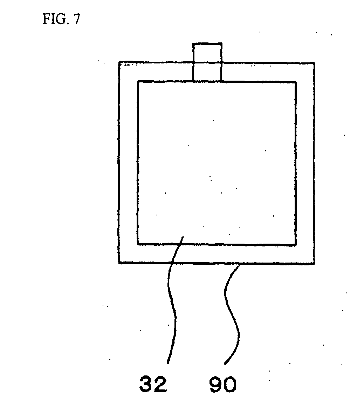

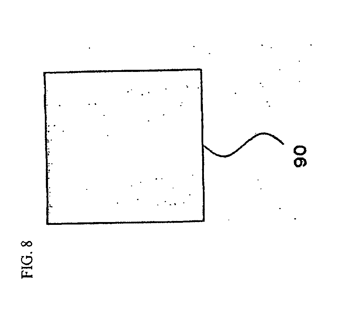

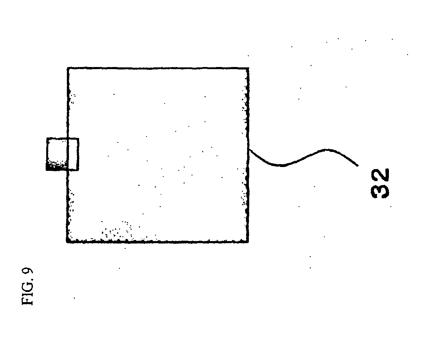

As illustrated in FIG. 5 through FIG. 9, the cathode 32 may be covered with a sheet member that is permeable to water. As the sheet member 90, a non-woven fabric or a multilayer mesh sheet, for example, may be used. The following benefits are achieved by covering the cathode 32 with a sheet member in this way.

Covering the cathode 32 with the sheet member 90 causes the electrolyzed water to be retained near the cathode 32. Because of this, the amount of charge is increased relative to the water that is retained near the cathode 32. The amount of increase in the charge relative to the water further reduces the scaling that adheres, based on the anions. The result not only facilitates continuous operation, but is able to eliminate or reduce the frequency of reverse cleaning of the cathode 32, enabling the achievement of an electrolysis device that is more useful in an industrial application. At the same time, this is able to prevent the ion exchange membrane 54 from being destroyed by the deposition of scaling on the cathode 32, thus fulfilling the role of protecting the ion exchange membrane as well. Note that the anode 22 may also be covered with the same type of sheet member as the cathode 32.

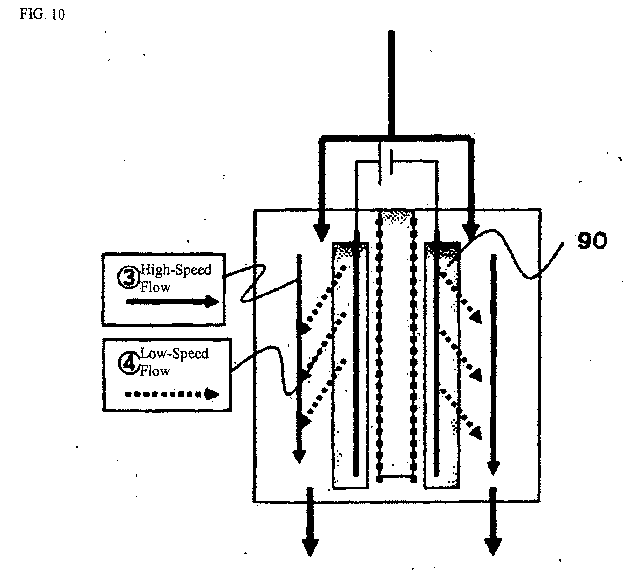

The effects of operation will be explained in greater detail using FIG. 10. The source water that is supplied to the electrolysis tank flows over the surface of the electrode plate at a high speed. At this time, scaling will adhere to the electrode surface, especially on the cathode side; however, covering the electrode surface with a mesh sheet will cause the source water to flow in two flow bands, a high-speed flow band and a low-speed flow band. 120% electric current can be applied to the low-speed flow wherein the electrically conductive electrode surface is covered with a mesh. The application of this large electric current prevents, using the simple method of coating with a simple mesh sheet, the scaling that would adhere to the surface of the electrode plate on the cathode side.

### (3) THIRD MODIFIED EXAMPLE

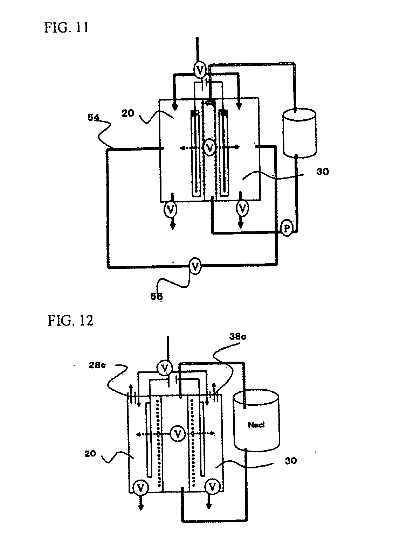

While in the form of embodiment set forth above, the anode chamber 20 and the cathode chamber 30 were connected by a connecting hole 52 in the partitioning wall 50, instead they may be connected by a connecting passage 54 provided separately, as illustrated in FIG. 11. The connecting passage 54 has the benefit of making it easier to understand the amount of water that moves between the anode chamber 20 and the cathode chamber 30. An adjustable valve 56 may be provided in the connecting passage 54. The amount of water moving between the anode chamber 20 and the cathode chamber 30 can be adjusted using the adjustable valve 56.

### (4) FORTH MODIFIED EXAMPLE

As illustrated in FIG. 12, a first gas removing opening 28c may be provided for removing the gas that is produced in the anode chamber 20. Doing so makes it possible to exhaust the gas that is produced in the anode chamber 20, making it possible to prevent instability in flow due to the gas. Additionally, a second gas removing opening 38c may be provided for removing the gas that is produced in the cathode chamber 30. Doing so makes it possible to exhaust the gas that is produced in the cathode chamber 30, making it possible to prevent instability in flow due to the gas. The first and second gas removing openings 28c and 38c may be closed completely when necessary.

### (5) FIFTH MODIFIED EXAMPLE

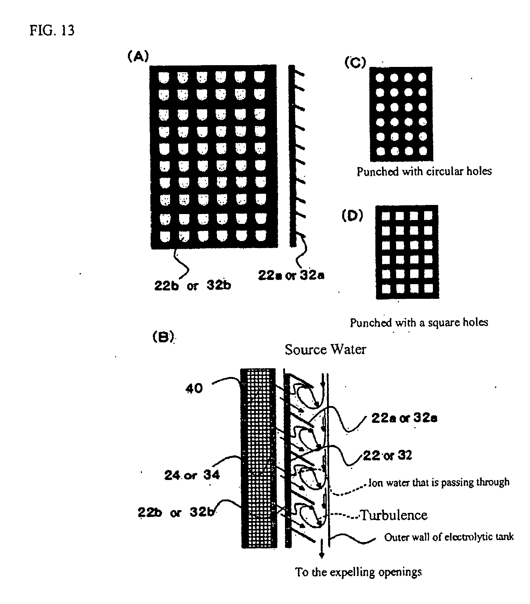

The anode 22, as illustrated in FIG. 13, can be an electrode having prong electrode portions 22a. Furthermore, similarly, prong electrode portions 32a may be provided also on the cathode 32. The prong electrode portions 22a and 32a may be formed so as to extend from edges of the holes 22b and 32b that are formed through punching. The prong electrode portions 22a and 32a may be formed through performing punching so as to cause to remain, rather than being removed, when forming the holes in the electrodes 22 and 32 through punching. While conventionally, in punched electrodes, the portions that have been opened through punching have been removed, and the remaining electrode surface portion has been used, in this method the surface area used in the electrode would be about 50% of that prior to the formation of the holes through punching, reducing by half the volume of the water that is in contact with the electrode surface, causing a drop in the rate of electrolysis. However, by causing the punched portion of the electrode to remain, rather than being removed, it is possible to have the entire electrode prior to the punching remain (enabling the entire surface area to be maintained), and thus there is no drop in the rate of electrolysis. Furthermore, the blade portions that remain after punching cause the movement of the water to be smoothed at the back surface of the electrode, improving the rate of electrolysis from this point as well. Furthermore, it has been confirmed that a cut angle at the attachment base of the blade portions produces more gas bubbles than the flat portion of the electrode, producing an effusive electrolysis reaction. This can be assumed to improve the rate of electrolysis through causing the movement of the water on the back surfaces of the electrodes 22 and 32 to the turbulent due to the half-punching. That is, the ion water that moves to the electrodes 22 and 32 from the middle chamber 40 moves to the electrolysis tanks on the outside of the electrodes 22 and 32 from the punched through holes 22b and 32b, and, at this time, the source water that has passed on the outside of the electrodes 22 and 32 is caused to be turbulent while striking the prong electrode portions 22a and 32a of the electrodes 22 and 32, mixing with the ion water that moves from the middle chamber 40, to caused contact with the electrode plate surface as a turbulent flow, achieving an improved rate of electrolysis.

Note that the punching method may use a well-known method. The shape of the punched holes may be circular or may be polygonal.

### (6) SIXTH MODIFIED EXAMPLE

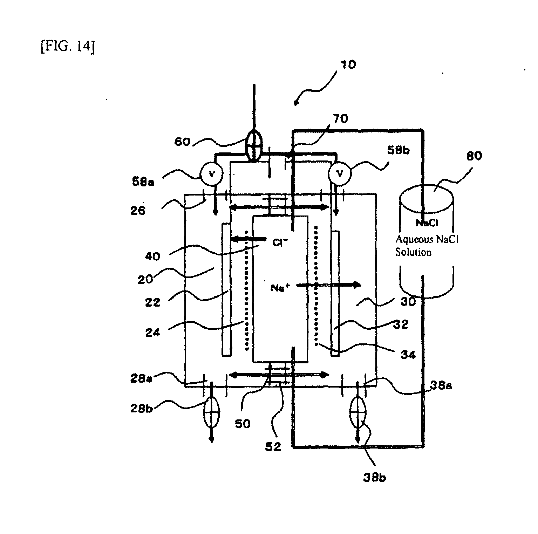

As is illustrated in FIG. 14, a first open/shut valve 58a for determining whether or not to supply water to the anode chamber may be provided. In an ordinary electrolysis device, electrolysis cannot be performed unless water is supplied to both the anode chamber and the cathode chamber. However, in the present example of embodiment, the anode chamber 20 and the cathode chamber 30 are connected, so that even if the open/shut valve 58a is closed, the water will be supplied through the cathode chamber 30 to the anode chamber 20, enabling electrolysis in a method that was not possible using an ordinary electrolysis device. For example, an electrolyzed water having strong acidity can be produced when the first open/shut valve 58a is closed and the electrolyzed water is expelled from only the anode chamber 20 side.

Additionally, similarly a second open/shut valve 58b for determining whether or not water flows into the cathode chamber 30 may be provided. As long as the first open/shut valve 58a is open, then even if the second open/shut valve 58b is closed, water will be supplied to the cathode chamber 30 through the anode chamber 20, enabling electrolysis, which would not be possible in an ordinary electrolysis device. An electrolyzed water having strong alkalinity can be produced through, for example, closing the second open/shut valve 58b and expelling the electrolyzed water from the cathode chamber side only.

### (7) SEVENTH MODIFIED EXAMPLE

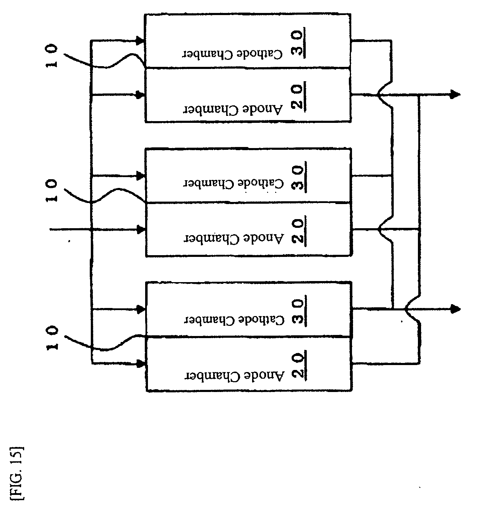

As illustrated in FIG. 15, a plurality of electrolysis devices 10 may be connected in parallel. That is, a plurality of anode chambers 20 and a plurality of cathode chambers 30 may be prepared, and the electrolyzed water expelled from each anode chamber 20 may be exhausted from a common exhaust opening, and the electrolyzed water expelled from each cathode chamber 30 may be exhausted from a common exhaust opening. This modified example connects the plurality of individual anode tanks in parallel and connects the plurality of individual cathode tanks in parallel, enabling parallel processing of the electrolysis of the water, facilitating the production of large volumes of electrolyzed water.

### (8) EIGHTH MODIFIED EXAMPLE

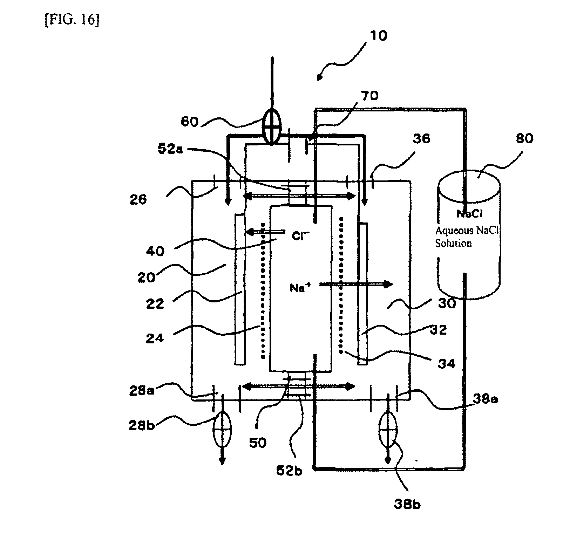

As illustrated in FIG. 16, the first connecting hole 52a that is provided on the supplying opening side and a second connecting hole 52b that is provided on the expelling opening side may be included, where the first connecting hole 52a may be smaller than the second connecting hole 52b. The opening ratios of the first connecting hole 52a to the second connecting hole 52b may be, for example, between 0.5:9.5 and 1.5:8.5.

When the acidic water produced in the anode chamber has entered into the cathode chamber through the connecting hole, the first connecting hole 52a is small, thus making it possible to control the secondary electrolysis of the hypochlorous acid, and the like, included in the acidic water in the cathode chamber. In other words, it is possible to mix and expel the acidic water and the alkaline water while preventing extremely the secondary electrolysis of the acidic water. The first connecting hole 52a may be provided so as to cause a flow of an amount of acidic water capable of preventing scaling on the cathode. It has been confirmed through experimentation that calcium carbonate is not produced in the alkaline water at the cathode when an acidic water of a pH of about 3.0 is mixed at more than 10% relative to the source water that is supplied to the cathode chamber.

Additionally, when the alkaline water is used in rinsing, or the like, or used actively on vegetable material, the calcium carbonate will adhere to the inside of the piping, or may induce a failure such as adhering to the shaft of a feed water pump, preventing the pump shaft from turning. However, in the present modified example, there is the effect of not producing this type of calcium carbonate precipitated.

Furthermore, because there is the second connecting hole 52b, a predetermined amount of the hypochlorous acid can move to the cathode side.

### (9) NINTH MODIFIED EXAMPLE

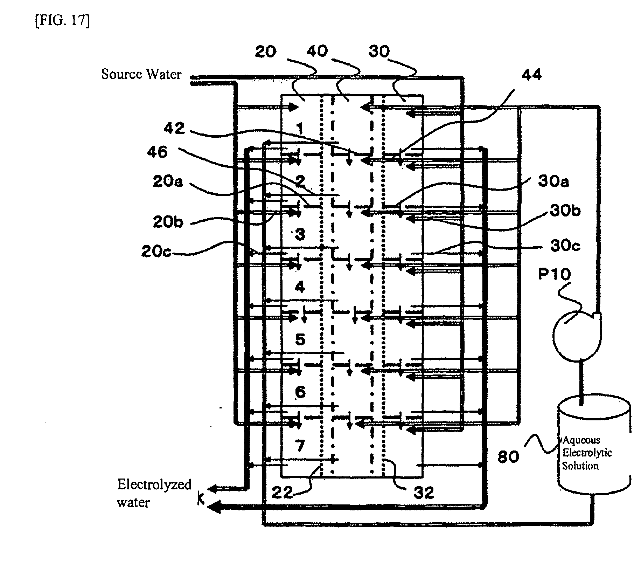

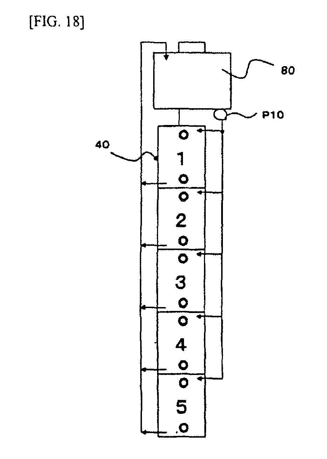

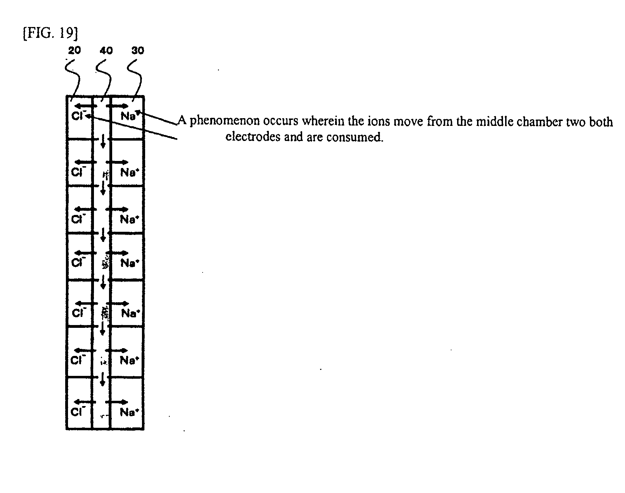

As illustrated in FIG. 17 through FIG. 19, the middle chamber 40 can be divided into a plurality of compartments in the direction in which the anode 22 and the cathode 32 extend. The plurality of compartments of the middle chamber can be divided by dividing portions 42. The divided into compartments by the dividing portions 42 makes it possible to contain the aqueous electrolytic solution, enabling the movement of the electrolytic ions to occur more reliably, enabling efficient electrolysis. The plurality of compartments in the middle chamber 40 can each be connected to the compartments adjacent thereto. It in this case, supplying portions 44 may be provided for each individual compartment of the plurality of compartments. Furthermore, an individual exhausting portion 46 for the aqueous electrolytic solution may be provided for each individual compartment of the plurality of compartments of the middle chamber 40. The supplying portions 44 and exhausting portions 46 may be achieved through, for example, connecting pipes to the side portion of the middle chamber 40.

(a) The supplying portion 44 may be a supplying portion for supplying an electrolyte, rather than for supplying an aqueous electrolytic solution.

(b) The individual compartments in the middle chamber 40 may be divided completely by the dividing portions 42. In this case, the supplying portions 44 for supplying the aqueous electrolytic solution, and the exhausting portions 46 for exhausting the aqueous electrolytic solution, are required for each individual compartment.

(c) the middle chamber 40 can be modified as follows. A primary supplying portion for the aqueous electrolytic solution is provided on one end of the middle chamber 40 (one side in the direction in which the anode 22 and the cathode 32 extend), and a primary exhaust portion for the aqueous electrolytic solution can be provided on the other end of the middle chamber 40 (the other side in the direction in which the anode 22 and the cathode 32 extend). At least one secondary supplying portion for supplying the aqueous electrolytic solution may be provided between the primary supplying portion for the aqueous electrolytic solution and the primary exhausting portion for the aqueous electrolytic solution.

In this case, a plurality of compartments may be provided in the anode chamber 20 corresponding to the compartments in the middle chamber 40. These compartments may be divided by dividing portions 20a. Furthermore, the individual compartments in the anode chamber 20 may or may not be connected to the compartments adjacent thereto. Additionally, a source water supplying portion 20b and an exhausting portion 20c may be provided in each of the compartments of the anode chamber 20. Note that in the case wherein the individual compartments of the anode chamber 20 are not connected to the adjacent compartments, the supplying portion 20b for source water and the exhausting portion 20c should be provided for each individual compartment. Dividing the compartments using the dividing portions 20a makes it possible to hold the aqueous electrolytic solution, making it possible for the electrolyte ions to move with more certainty, enabling the achievement of efficient electrolysis.

When the exhausting portion of the anode chamber 20 is provided for only the last compartment, highly concentrated electrolyzed water will be produced, which is apt to damage the partitioning membrane, and thus an exhausting portion 20c should be provided for each compartment.

Furthermore, a plurality of compartments may be provided in the cathode chamber 30 corresponding to the compartments in the middle chamber 40. These compartments may be divided by dividing portions 30a. Furthermore, the individual compartments in the cathode chamber 30 may or may not be connected to the compartments adjacent thereto. Additionally, a source water supplying portion 30b and an exhausting portion 30c may be provided in each of the compartments of the cathode chamber 30. Note that in the case wherein the individual compartments of the cathode chamber 30 are not connected to the adjacent compartments, the supplying portion 30b for source water and the exhausting portion 30c should be provided for each individual compartment. Dividing the compartments using the dividing portions 30a makes it possible to hold the aqueous electrolytic solution, making it possible for the electrolyte ions to move with more certainty, enabling the achievement of efficient electrolysis.

When the exhausting portion of the cathode chamber 30 is provided for only the last compartment, highly concentrated electrolyzed water will be produced, which is apt to damage the partitioning membrane, and thus an exhausting portion 30c should be provided for each compartment.

The present modified example has the effects of operations set forth below.

Conventionally, in three-chamber electrolysis devices, typically large scale production of electrolyzed water is not performed using a single electrolytic tank. The present inventors discovered the reasons why it is not possible to produce electrolyzed water on a large scale using a single electrolytic tank to be as follows. The distance between the anode and the cathode that lie on either side of the middle tank is extremely important in terms of electric conductance. The shorter the distance between the anode and the cathode, the higher the conductivity; however, it is necessary to have at least a given spacing because of the middle chamber between the electrodes. Because of this, while there is a limit to the flow rate of the electrolytes that flow in the middle chamber, the electrolysis causes ions to move from the middle chamber to the anode chamber and the cathode chamber, consuming the electrolyte in the middle chamber, causing a shortage of the Na⁺ and CL⁻, or the like, that is necessary for the electrolysis. That is, the aqueous electrolytic solution flows in a narrow gap that is typically between 3 and 6 mm, as the gap for the middle chamber between the anode and the cathode. While a saturated saline solution for the aqueous electrolytic solution carries electricity the most efficiently, the Na⁺ and CL⁻ ions of the electrolytic solution that flows through the narrow middle chamber pass through the ion exchange membranes to move to both electrodes, so the ion concentration in the middle chamber falls, based on the ions being consumed, as the solution passes through the electrolytic tank. Because of this, if there were a single large electrolytic tank, then there would be a large difference between the ion concentrations in the vicinity of the electrolytic solution inlet and the vicinity of the outlet.

A high voltage is required when the electrolyte ion concentration within the middle chamber falls to below a given level through the ions being consumed. However, it is necessary to perform the electrolysis at a given low voltage in order to prevent wasted power and damage to the electrode or partitioning membrane. Given this, structurally there is, of course, a natural value for the electrolytic surface area in order to maintain the optimally efficient voltage. The result is that the inventors in the present application wondered if it might be possible to overcome the problems accompanying large-scale production of electrolyzed water, and discovered the cause of the problem.

The present modified example focuses on the cause of this problem. That is, the provision of a supplying portion 44 for supplying an electrolyte or an aqueous electrolytic solution partway through the middle chamber 40 makes it possible to replenish the electrolyte that has been consumed. Consequently, it is possible to cause the electrolyte concentrations in each of the compartments in the middle chamber 40 to be uniform. As a result, it is possible to suppress non-uniformity in the electrolytic efficiency in the individual electrolysis parts, making it possible to achieve efficient and effective electrolysis. Furthermore, the ability to achieve uniformity in the electrolyte concentrations enables driving at a low voltage, and can prevent damage to electrodes and ions exchange membranes.

### 5. EXAMPLES OF EXPERIMENTS

Examples of experiments will be explained below.

(1) Experimental results under various conditions will be presented.

Table 2 illustrates experimental results under various conditions for an electrolysis device wherein the anode chamber and the cathode chamber are connected. The experiment was performed regarding whether or not the nature of the electrolyzed water would change depending on different conditions for the supplying openings, the connecting holes, and the expelling openings in the electrolysis device. Chloride test paper (10 to 50 ppm) (brand name: Advantec, manufactured by Toyo Engineering Works) was used when measuring the concentration of the hypochlorous acid.

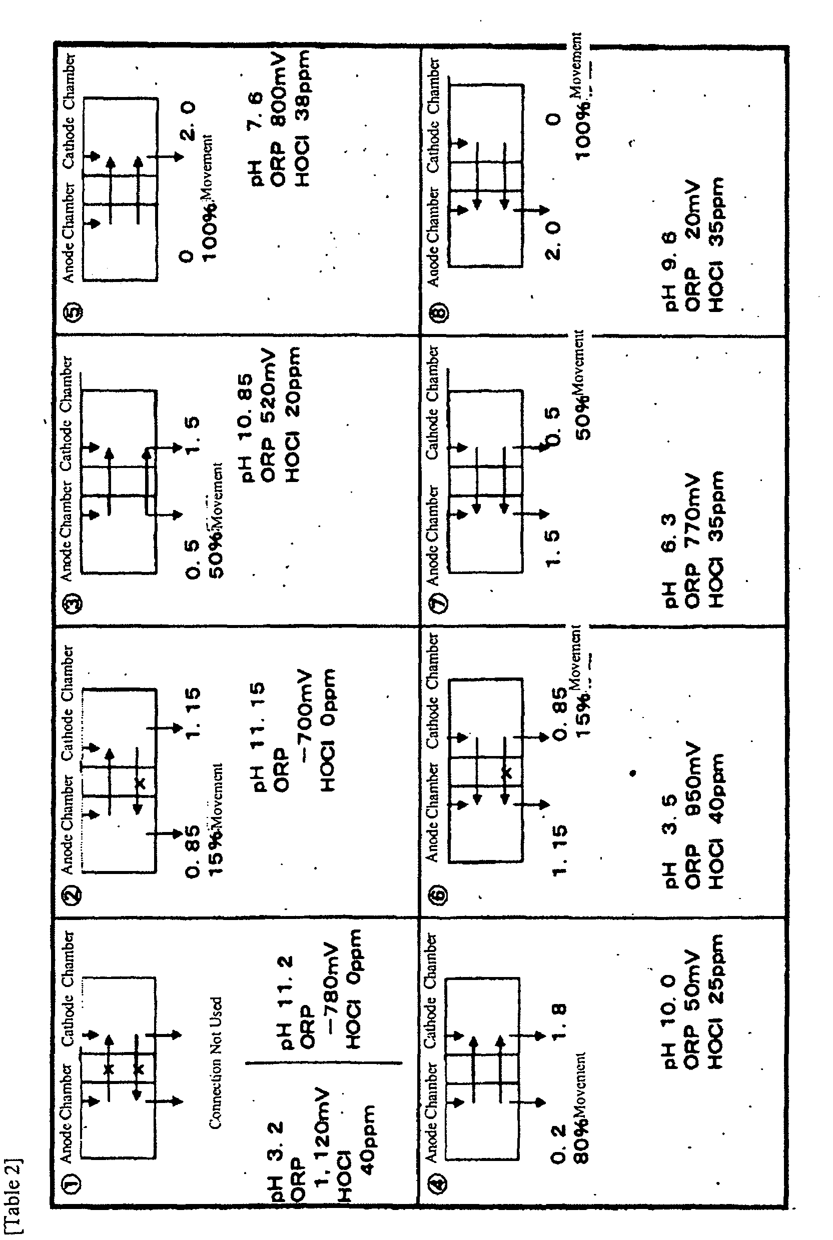

### (2) PH ADJUSTMENT

It is understood from Table 2 that the electrolysis device wherein the anode chamber and the cathode chamber are connected enables the production of electrolyzed water with a pH value between 3 and 11. The specific states of connection between the anode chamber and the cathode chamber, and the states of the providing opening and the expelling opening are illustrated in Table 1. As shown in Table 1, the pH value can be adjusted freely by adjusting the state of connection between the anode chamber and the cathode chamber and by adjusting the states of the supplying opening and the expelling opening.

The electrolyzed water that is expelled from the anode chamber was found to be adjustable in at least a range of pH values between 2.2 and 9.6, with an ORP of between 1120 mV and 20 mV, and a hypochlorous acid concentration between 40 ppm and 35 ppm.

The electrolyzed water that is expelled from the cathode chamber was found to be adjustable in at least a range of pH values between 7.6 to 11.2, with an ORP of between 800 mV and -780 mV , and a hypochlorous acid concentration between 0 ppm and 38 ppm.

(3) In regards to the adhesion of scaling to the cathode, conventionally scaling has adhered to the cathode. However, even after 50 hours of use of the electrolysis device, no adhesion of scaling to the cathode was visible.

(4) In regards to floating free particles (precipitate), water was electrolyzed in a state wherein the anode chamber and the cathode chamber were connected, and the electrolyzed water was expelled from the cathode chamber. It was observed that there were no floating particles (calcium oxide, or the like) in the electrolyzed water.

Various modifications can be made within the scope of the present invention in the examples of embodiment set forth above.

### POTENTIAL FOR USE IN INDUSTRY

Given the present invention, the anode chamber and the cathode chamber are connected, and thus scaling does not adhere to the cathode of the cathode chamber, making it possible to eliminate or reduce the frequency of the process for cleaning the scaling, enabling long-term continuous operation.

## Claims

1. An electrolyzed water manufacturing device comprising:
an anode chamber provided with an anode electrode;
a cathode chamber provided with a cathode electrode;
a middle chamber for containing an aqueous electrolytic solution, provided between the anode chamber and the cathode chamber;
a first partitioning membrane, made from a cation exchange membrane, for partitioning between the anode chamber and the middle chamber; and
a second partitioning membrane, made from an anion exchange membrane, for partitioning between the cathode chamber and the middle chamber; wherein
the anode chamber and the cathode chamber are connected; and
the structure is such that water can move in both directions between the anode chamber and the cathode chamber.

2. An electrolyzed water manufacturing device as set forth in Claim 1, wherein:
the anode chamber and the cathode chamber are separated by a partitioning wall; and
a connecting hole for connecting between the anode chamber and the cathode chamber is provided in the partitioning wall.

3. An electrolyzed water manufacturing device as set forth in Claim 1 or Claim 2, wherein:
a delivery ratio adjusting valve for determining the delivery ratio of the amount of water flowing into the anode chamber and the amount of water flowing into the cathode chamber is provided

4. An electrolyzed water manufacturing device as set forth in Claim 1 or Claim 2, comprising:
a first expulsion the valve for adjusting the expulsion rate for expelling the fluid of the anode chamber; and
a second expulsion valve for adjusting the expulsion rate for expelling the fluid of the cathode chamber.

5. An electrolyzed water manufacturing device as set forth in Claim 1 or Claim 2, comprising:
a first fluid supplying opening for supplying fluid to the anode chamber;
a second fluid supplying opening for supplying fluid to the cathode chamber;
a first expelling opening for expelling fluid of the anode chamber; and
a second expelling opening for expelling fluid of the cathode chamber; wherein:
the first fluid supplying opening is provided at an upper portion of the anode chamber;
the second supplying opening is provided at an upper portion of the cathode chamber;
the first expelling opening is provided at a lower portion of the anode chamber; and
the second expelling opening is provided at a lower portion of the cathode chamber.

6. An electrolyzed water manufacturing device as set forth in Claim 1 or Claim 2, wherein:
the anode chamber is larger in the direction of height of the anode chamber than the width of the anode chamber in the direction that is perpendicular to the anode.

7. An electrolyzed water manufacturing device as set forth in Claim 1 or Claim 2, wherein:
the aqueous electrolytic solution includes chloride ions; and
the electrolyzed water manufacturing device manufactures electrolyzed water containing hypochlorous acid.

8. An electrolyzed water manufacturing method as set forth in Claim 1 or Claim 2, wherein:
the cation exchange membrane is provided with pores Through which the aqueous electrolytic solution can pass.

9. An electrolyzed water manufacturing device as set forth in Claim 1 or Claim 2, wherein:
the cathode is covered with a sheet member that is permeable to water.

10. An electrolyzed water manufacturing device as set forth in Claim 1 or Claim 2, wherein:
a connecting passage is provided connecting the anode chamber and the cathode chamber.

11. An electrolyzed water manufacturing device as set forth in Claim 10, wherein:
an adjustable valve is provided in the connecting passage.

12. An electrolyzed water manufacturing device as set forth in Claim 1 or Claim 2, wherein:
a first gas removing opening for removing gas that is generated in the anode chamber is provided.

13. An electrolyzed water manufacturing device as set forth in Claim 1 or Claim 2, wherein:
a second gas removing opening for removing gas that is generated in the cathode chamber is provided.

14. An electrolyzed water manufacturing device as set forth in Claim 1 or Claim 2, wherein:
a punched hole is provided in the electrode, and a prong electrode portion extending from an edge of the punched hole is provided.

15. An electrolyzed water manufacturing device as set forth in Claim 14, wherein:
the prong electrode portion is formed by causing the punched portion to remain, rather than being removed, at the time of punching.

16. An electrolyzed water manufacturing device as set forth in Claim 1 or Claim 2, wherein:
an open/shut valve for determining whether or not to provide water to the anode chamber is provided.

17. An electrolyzed water manufacturing device as set forth in Claim 1 or Claim 2, wherein:
an open/shut valve for determining whether or not to provide water to the cathode chamber is provided.

18. An electrolyzed water manufacturing device as set forth in Claim 1 or Claim 2, wherein:
a plurality of the anode chambers is provided;
a plurality of the cathode chambers is provided;
electrolyzed water expelled from the individual anode chambers is exhausted from a common exhaust opening; and
electrolyzed water expelled from the individual cathode chambers is exhausted from a common exhaust opening.

19. An electrolyzed water manufacturing device as set forth in Claim 1 or Claim 2, comprising:
a first connecting hole provided on the side wherein the source water is supplied; and
a second connecting hole provided on the side wherein the electrolyzed water is expelled; wherein
the first connecting hole is smaller than the second connecting hole.

20. An electrolyzed water manufacturing device as set forth in Claim 1 or Claim 2, wherein:
the middle chamber is divided into a plurality of compartments in the direction in which the anode and the cathode extend, wherein an electrolyte or aqueous electrolytic solution supplying portion is provided in each of the individual compartments of the plurality of compartments.

21. An electrolyzed water electrolysis device as set forth in Claim 20 wherein:
the electrolyzed water manufacturing device is provided with an aqueous electrolytic solution exhausting portion in each individual compartment of the plurality of compartments in the middle chamber.

22. An electrolyzed water manufacturing device as set forth in Claim 19 or Claim 20, wherein:
each compartment of the plurality of compartments in the middle chamber is connected to the compartments adjacent thereto.

23. An electrolyzed water manufacturing device as set forth in Claim 20 or Claim 21, wherein:
each of the plurality of compartments in the middle chamber are separated from each other by separating portions.

24. An electrolyzed water manufacturing device as set forth in Claim 1 or Claim 2, wherein:
a supplying portion for an electrolyte or an aqueous electrolytic solution and an exhausting portion for an aqueous electrolytic solution are provided in the middle chamber; and
at least one secondary supplying portion for supplying an electrolyte or an aqueous electrolytic solution is provided between the supplying portion for the aqueous electrolytic solution and the exhausting portion for the aqueous electrolytic solution.

25. An electrolyzed water manufacturing method for manufacturing electrolyzed water using the electrolyzed water manufacturing device as set forth in Claim 1 or Claim 2, including:
a process for performing electrolysis while mixing water produced in the anode chamber and water produced in the cathode chamber.

26. Electrolyzed water obtained through the electrolyzed water manufacturing method as set forth in Claim 25.
